(19)

Europäisches Patentamt

European Patent Office

Office européen des brevets

(11) **EP 4 668 621 A1**

(12) **EUROPEAN PATENT APPLICATION**
published in accordance with Art. 153(4) EPC

(43) Date of publication:
**24.12.2025 Bulletin 2025/52**

(21) Application number: **24783969.9**

(22) Date of filing: **02.02.2024**

(51) International Patent Classification (IPC):
*H04J 3/06* $^{(2006.01)}$

(52) Cooperative Patent Classification (CPC):
**H04J 3/06; H04J 3/16**

(86) International application number:
**PCT/CN2024/075471**

(87) International publication number:
**WO 2024/207884 (10.10.2024 Gazette 2024/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **07.04.2023 CN 202310409704**

(71) Applicant: **Huawei Technologies Co., Ltd.**
**Shenzhen, Guangdong 518129 (CN)**

(72) Inventors:
• **FAN, Qirui**
  **Shenzhen, Guangdong 518129 (CN)**
• **LIU, Xiang**
  **Shenzhen, Guangdong 518129 (CN)**
• **ZHENG, Shuqian**
  **Shenzhen, Guangdong 518129 (CN)**

(74) Representative: **Isarpatent**
**Patent- und Rechtsanwälte**
**Barth Hassa Peckmann & Partner mbB**
**Friedrichstraße 31**
**80801 München (DE)**

(54) **METHOD AND APPARATUS FOR CLOCK RECOVERY AND SYSTEM**

(57) This application provides a clock recovery method, an apparatus, and a system, and may be applied to a destination device in an optical transport network. The method includes: obtaining first phase difference information, and generating target phase difference information based on the first phase difference information and accumulated phase difference information, where the target phase difference information is used to recover a clock of a first data frame. The first phase difference information is a sum of input phase difference information and a local phase difference. The input phase difference information is a sum of phase differences between one or more groups of two adjacent upstream devices in one or more upstream devices of a destination device through which the first data frame passes. A value of the target phase difference information is a first value, a second value, or 0. The accumulated phase difference information is an accumulation of differences between historical first phase difference information and historical target phase difference information that are present before a destination device obtains the first phase difference information. According to the clock recovery method provided in this application, accuracy of clock recovery of an OTN frame can be improved, to improve system reliability.

S403: Receive a second data frame

S404: Obtain a first data frame from the second data frame through demapping, where first phase difference information is carried in the first data frame

S401: Obtain the first phase difference information, where the first phase difference information is used to recover a clock of the first data frame

S402: Output and generate target phase difference information based on the first phase difference information and accumulated phase difference information, where a value of the target phase difference information is a first value, a second value, or 0, the target phase difference information is used to recover the clock of the first data frame, and the accumulated phase difference information is an accumulation of differences between historical first phase difference information and historical target phase difference information that are present before a destination device obtains the first phase difference information

S405: Update the accumulated phase difference information

S406: Update historical average phase difference information

FIG. 4

EP 4 668 621 A1

## Description

This application claims priority to Chinese Patent Application No. 202310409704.3, filed with the China National Intellectual Property Administration on April 7, 2023 and entitled "CLOCK RECOVERY METHOD, APPARATUS, AND SYSTEM", which is incorporated herein by reference in its entirety.

## TECHNICAL FIELD

This application relates to the field of optical transport technologies, and more specifically, to a clock recovery method, an apparatus, and a system.

## BACKGROUND

An optical transport network (optical transport network, OTN) can provide a higher transmission rate, higher transmission efficiency, and better operations, administration and maintenance capabilities based on wavelength division multiplexing technologies. The optical transport network has become a mainstream technology of a backbone transmission network.

When transporting a plurality of types of service data, an OTN system further needs to transmit timing information (mainly clock synchronization frequency) corresponding to each service. Therefore, how to ensure that a service clock recovered by the transport network is highly consistent with a service clock of a service received by the transport network to ensure that a client device correctly receives the service is a problem to be resolved.

## SUMMARY

Embodiments of this application provide a clock recovery method, an apparatus, and a system, so that a destination device can accurately recover a service clock, to improve system reliability.

According to a first aspect, an embodiment of this application provides a clock recovery method. The method is applied to an optical transport device, and may be performed by a destination device or a component (for example, a chip or a chip system) of the destination device. This is not limited in this application. The method includes: obtaining first phase difference information, where the first phase difference information is a sum of input phase difference information and a local phase difference, and the input phase difference information is a sum of phase differences between one or more groups of two adjacent upstream devices in one or more upstream devices of the optical transport device through which a first data frame passes; and generating target phase difference information based on the first phase difference information and accumulated phase difference information, where a value of the target phase difference information is a first value, a second value, or 0, the target phase difference information is used to recover a clock of the first data frame, and the accumulated phase difference information is an accumulation of differences between historical first phase difference information and historical target phase difference information that are present before the optical transport device obtains the first phase difference information.

The destination device accumulates a difference between first phase difference information obtained each time and generated target phase difference information to obtain the accumulated phase difference information, so that integrity of phase difference information of the destination device in a clock recovery process is ensured, and lossless clock recovery is implemented. In addition, the target phase difference information used by the destination device for clock recovery is related to both the currently obtained first phase difference information and the accumulated phase difference information, and the target phase difference information is clipped to the first value, the second value, or 0, that is, the destination device changes time distribution of the first phase difference information in a manner of input accumulation and output clipping, so that jitter caused by the first phase difference information generated through quantization accumulation is reduced, and system reliability is improved.

With reference to the first aspect, in some implementations of the first aspect, the generating the target phase difference information based on the first phase difference information and the accumulated phase difference information includes: summing up the first phase difference information and the accumulated phase difference information to generate instantaneous phase difference information; and generating average accumulated phase difference information by using a memory factor, historical average accumulated phase difference information, and the instantaneous phase difference information. When the average accumulated phase difference information is greater than or equal to the first value, the target phase difference information is the first value; when the average accumulated phase difference information is less than or equal to the second value, the target phase difference information is the second value; or when the average accumulated phase difference information is less than the first value and greater than the second value, the target phase difference information is 0. The value of the target phase difference information is associated with the average accumulated phase difference information, so that accuracy of the target phase difference information can be further improved, and accuracy of clock recovery can be improved.

With reference to the first aspect, in some implementations of the first aspect, the average accumulated phase difference information $m_k$ satisfies:

$$m_k = \beta m_{k-1} + \left(1 - \beta\right) r_k'$$ . $\beta$ is the memory factor, $m_{k-1}$ is the historical average accumulated phase difference information, and $r_k'$ is the instantaneous phase difference information.

With reference to the first aspect, in some implementations of the first aspect, the method further includes: updating the accumulated phase difference information, where updated accumulated phase difference information is a sum of a difference between the first phase difference information and the target phase difference information and the accumulated phase difference information; and updating the historical average accumulated phase difference information, where updated historical average accumulated phase difference information is the average accumulated phase difference information. The accumulated phase difference information and the historical average accumulated phase difference information is updated, so that accuracy of data when the destination device recovers a clock can be ensured, to ensure reliability of clock recovery.

With reference to the first aspect, in some implementations of the first aspect, the first value is equal to n, the second value is equal to -n, and n is an integer greater than or equal to 1. With reference to the first aspect, in some implementations of the first aspect, the first value is equal to 1, and the second value is equal to -1.

With reference to the first aspect, in some implementations of the first aspect, the first value and the second value are directly proportional to the accumulated phase difference information. The target phase difference information is associated with the accumulated phase difference information, so that the target phase difference information can be dynamically adjusted based on a change of the accumulated phase difference information, to further improve clock recovery efficiency and improve system performance.

With reference to the first aspect, in some implementations of the first aspect, the method further includes: receiving a second data frame from the upstream device; and obtaining the first data frame from the second data frame from the upstream device through demapping, where the first phase difference information is carried in the first data frame.

According to a second aspect, an embodiment of this application provides a clock recovery apparatus. The apparatus includes an obtaining module and a processing module. The obtaining module is configured to obtain first phase difference information. The first phase difference information is a sum of input phase difference information and a local phase difference, and the input phase difference information is a sum of phase differences between one or more groups of two adjacent upstream devices in one or more upstream devices of the apparatus through which a first data frame passes. The processing module generates target phase difference information based on the first phase difference information and accumulated phase difference information. A value of the target phase difference information is a first value, a second value, or 0, the target phase difference information is used to recover a clock of the first data frame, and the accumulated phase difference information is an accumulation of differences between historical first phase difference information and historical target phase difference information that are present before the apparatus obtains the first phase difference information.

With reference to the second aspect, in some implementations of the second aspect, the processing module is specifically configured to: sum up the first phase difference information and the accumulated phase difference information to generate instantaneous phase difference information; and generate average accumulated phase difference information by using a memory factor, historical average accumulated phase difference information, and the instantaneous phase difference information, where when the average accumulated phase difference information is greater than or equal to the first value, the target phase difference information is the first value; when the average accumulated phase difference information is less than or equal to the second value, the target phase difference information is the second value; or when the average accumulated phase difference information is less than the first value and greater than the second value, the target phase difference information is 0.

With reference to the second aspect, in some implementations of the second aspect, the processing module is further configured to: update the accumulated phase difference information, where updated accumulated phase difference information is a sum of a difference between the first phase difference information and the target phase difference information and the accumulated phase difference information; and update the historical average accumulated phase difference information, where updated historical average accumulated phase difference information is the average accumulated phase difference information.

With reference to the second aspect, in some implementations of the second aspect, the obtaining module is further configured to: receive a second data frame from the upstream device; and obtain the first data frame from the second data frame from the upstream device through demapping, where the first phase difference information is carried in the first data frame.

With reference to the second aspect, in some implementations of the second aspect, for a relationship that the average accumulated phase difference information $m_k$ satisfies and values of the first value and the second value, refer to related descriptions in the first aspect. Details are not described again.

According to a third aspect, an embodiment of this application provides a clock information transmission system. The system includes a sending device and a destination device. Alternatively, the system includes a sending device, a destination device, and at least one first device (also referred to as an intermediate device). The purpose is to perform the method according to any one of the first aspect or the possible implementations.

According to a fourth aspect, an embodiment of this application provides an optical transport apparatus. The apparatus is configured to perform the method provided in either the first aspect or the second aspect. Specifically, the optical transport apparatus may include units and/or modules configured to perform the method provided in any one of the first aspect or the foregoing implementations of the first aspect, for example, a processing module and a transceiver module.

In another implementation, the optical transport apparatus may include units and/or modules configured to perform the method provided in any one of the first aspect or the foregoing implementations of the first aspect, and is a receive end device. The transceiver module may be a transceiver or an input/output interface. The processing module may be at least one processor. Optionally, the transceiver may be a transceiver circuit. Optionally, the input/output interface may be an input/output circuit.

Alternatively, the optical transport apparatus is a chip, a chip system, or a circuit in a receive end device. The transceiver module may be an input/output interface, an interface circuit, an output circuit, an input circuit, a pin, a related circuit, or the like on the chip, the chip system, or the circuit. The processing module may be at least one processor, a processing circuit, a logic circuit, or the like.

According to a fifth aspect, an embodiment of this application provides a processor, configured to perform the methods provided in the foregoing aspects. Operations such as sending and obtaining/receiving related to the processor may be understood as operations such as output and receiving or input of the processor, or may be understood as operations such as sending and receiving performed by a radio frequency circuit and an antenna, unless otherwise specified, or provided that the operations do not contradict actual functions or internal logic of the operations in related descriptions. This is not limited in this application.

According to a sixth aspect, an embodiment of this application provides a computer-readable storage medium. The computer-readable storage medium stores program code to be executed by a device, and the program code is used to perform the method provided in any one of the implementations of the first aspect.

According to a seventh aspect, an embodiment of this application provides a computer program product including instructions. When the computer program product runs on a computer, the computer is enabled to perform the method provided in any one of the implementations of the first aspect.

According to an eighth aspect, an embodiment of this application provides a chip. The chip includes a processor and a communication interface. The processor reads, through the communication interface, instructions stored in a memory, to perform the method provided in any one of the first aspect or the implementations of the first aspect.

Optionally, in an implementation, the chip further includes a memory. The memory stores a computer program or instructions, the processor is configured to execute the computer program or the instructions stored in the memory, and when the computer program or the instructions are executed, the processor is configured to perform the method provided in any one of the implementations of the first aspect.

For specific beneficial effects brought by the second aspect to the eighth aspect, refer to the descriptions of the beneficial effects in the first aspect. Details are not described herein again.

## BRIEF DESCRIPTION OF DRAWINGS

FIG. 1 is a diagram of an OTN optical network system to which an embodiment of this application is applicable;
FIG. 2 is a diagram of a possible hardware structure of a network device;
FIG. 3 is a diagram of a frame structure of an OTN frame applicable to an embodiment of this application;
FIG. 4 is a schematic flowchart of a clock recovery method 400 according to an embodiment of this application;
FIG. 5 is a schematic flowchart of a method 500 for generating target phase difference information according to an embodiment of this application;
FIG. 6 is a diagram of a structure of a clock recovery system 600;
FIG. 7 is a diagram of a structure of an optical transport device 700 according to an embodiment of this application; and
FIG. 8 is a diagram of a structure of another optical transport device 800 according to an embodiment of this application.

## DESCRIPTION OF EMBODIMENTS

The following describes technical solutions of this application with reference to accompanying drawings.

For ease of understanding of embodiments of this application, the following descriptions are provided.

First, in the following text descriptions or accompanying drawings in embodiments of this application, terms such as "first", "second", and the like, and various numbers are merely used for differentiation for ease of description, but do not need to be used to describe a specific order or sequence, and are not intended to limit the scope of embodiments of this application, for example, are used to distinguish between different data frames.

Second, in the following embodiments of this application, terms such as "include" and any variant thereof mean to cover non-exclusive inclusion. For example, a process, method, system, product, or device that includes a series of steps or units is not necessarily limited to those steps or units that are clearly listed, but may include another step or unit not clearly listed or inherent to such a process, method, product, or device.

Third, in embodiments of this application, a word such as "example" or "for example" are used to represent giving an example, an illustration, or descriptions. Any embodiment or design scheme described with "example" or "for example" should not be explained as being more preferred or having more advantages than another embodiment or design scheme. The word such as "example" or "for example" is used to present a related concept in a specific manner for ease of understanding.

Fourth, in the following embodiments of this application, only an OTN frame in an optical transport network (optical transport network, OTN) is used as an example to describe embodiments. It should be understood that another bearer OTN frame, a metro transport network (metro transport network, MTN) frame, or a new type of OTN frame and a new type of MTN frame that may be defined with development of an OTN technology and an MTN technology are also applicable to this application.

Five, in embodiments of this application, a device may also be referred to as a node or a node device, and a sending device may be referred to as a sending node, a transmitting end, or a source node. Similarly, a receiving device may be referred to as a receive end device, a receive end, a destination device, or a sink node. An intermediate device may be referred to as an intermediate node. It should be understood that the intermediate device may receive information from an upstream device, and may send information to a downstream device. Therefore, in embodiments of this application, the sending device is a source node or an intermediate node, and the receiving device is a destination node or an intermediate node. Specific determining needs to be performed according to a specific embodiment.

Sixth, in embodiments of this application, "at least one" means one or more, and "a plurality of" means two or more. For example, at least one item (piece) of a, b, and c may represent a, b, c, a and b, a and c, b and c, or a, b, and c, where a, b, and c may be single or plural.

Seventh, in embodiments of this application, an optical transport device may also be referred to as an optical transmission device or the like.

Eighth, in the solutions of this application, "historical" means the past or the previous, and is relative to current, a current moment, or current calculation. For example, historical average accumulated phase difference information is average accumulated phase difference information obtained before currently obtained average accumulated phase difference information. In embodiments of this application, the historical average accumulated phase difference information is average accumulated phase difference information obtained at a moment before the average accumulated phase difference information obtained at the current moment. In addition, in embodiments of this application, historical first phase difference information and historical target phase difference information is further included. The historical first phase difference information is first phase difference information obtained at all moments before currently obtained first phase difference information. Similarly, target phase difference information generated at all moments before current target phase difference information is collectively referred to as the historical target phase difference information.

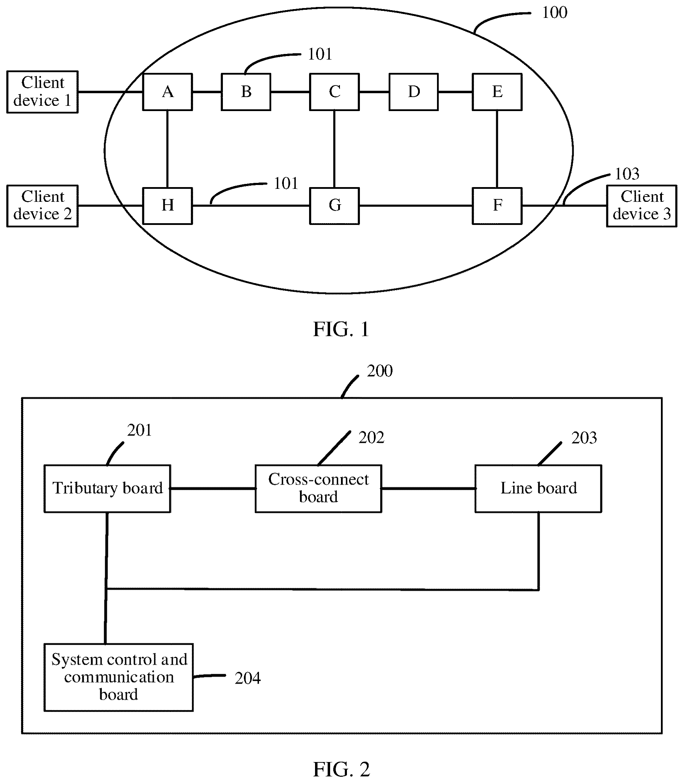

FIG. 1 is a diagram of an OTN optical network system to which an embodiment of this application is applicable. An OTN optical network is usually formed by connecting a plurality of devices through optical fibers and may be formed into different types of topologies such as linear, ring, and mesh topologies based on a specific requirement. An OTN 100 shown in FIG. 1 includes eight OTN devices 101, namely, devices A to H. 102 indicates an optical fiber, configured to connect two devices. 103 indicates a client service interface, configured to receive or send client service data. As shown in FIG. 1, the OTN 100 is configured to transmit service data for client devices 1 to 3. The client device is connected to the OTN device through the client service interface. For example, in FIG. 1, the client devices 1 to 3 are respectively connected to the OTN devices A, H, and F. In FIG. 1, when the client device 1 needs to communicate with the client device 3, the client device 1 may send service data by using the OTN devices A to F. For example, the OTN device A is a sending device, the OTN devices B to E are intermediate devices, and the OTN device F is a receiving device.

Generally, the OTN device includes an optical layer device, an electrical layer device, and a photoelectric hybrid device. The optical layer device is a device that can process an optical layer signal, for example, an optical amplifier (also referred to as an optical line amplifier) or an optical add/drop multiplexer. The optical amplifier is configured to amplify an optical signal, to support a longer transmission distance while ensuring specific performance of the optical signal. The optical add/drop multiplexer is configured to perform space transformation on the optical signal, so that the optical signal can be output from different output ports (sometimes also referred to as directions). The electrical layer device is a device that can process an electrical layer signal, for example, a device that can process an OTN signal. The photoelectric hybrid device is a device that has a capability of processing an optical layer signal and an electrical layer signal. It should be noted that, one OTN device may integrate a plurality of different functions based on a specific integration requirement. The technical solutions provided in this application are applicable to OTN devices that have different forms and degrees of integration and that include an electrical layer function.

It should be noted that a data frame structure used by the OTN device in embodiments of this application is an OTN frame. The OTN frame is used to carry various service data and provide rich management and monitoring functions. The OTN frame may be an optical data unit frame (optical data unit k, ODUk), an ODUCn frame, an ODUflex frame, an optical transport unit k (optical transport unit k, OTUk) frame, an OTUCn frame, a flexible OTN (FlexO) frame, or the like. A difference between the ODU frame and an OTU frame lies in that the OTU frame includes the ODU frame and OTU overheads. k represents different rate levels. For example, k=1 represents 2.5 Gbps, and k=4 represents 100 Gbps. Cn represents a variable rate, and is specifically a rate that is a positive integer multiple of 100 Gbps. Unless otherwise specified, the ODU frame is any one of the ODUk frame, the ODUCn frame, or the ODUflex frame, and the OTU frame is any one of the OTUk frame, the OTUCn frame, or the FlexO frame. With development of OTN technologies, a new type of OTN frame may be defined, and is also applicable to this application.

FIG. 2 is a diagram of a possible hardware structure of a network device, for example, the device A in FIG. 1. Specifically, an OTN device 200 includes a tributary board 201, a cross-connect board 202, a line board 203, an optical layer processing board (not shown in FIG. 2), and a system control and communication board 204. Based on a requirement, types and quantities of boards included in a network device may be different. For example, a network device used as a core node includes no tributary board 201. For another example, a network device used as an edge node includes a plurality of tributary boards 201, or includes no optical cross-connect board 202. For still another example, a network device supporting only an electrical layer function may include no optical layer processing board.

The tributary board 201, the cross-connect board 202, and the line board 203 are configured to process an electrical layer signal of the OTN. The tributary board 201 is configured to receive and send various client services such as an SDH service, a packet service, an Ethernet service, and a forward service. Further, the tributary board 201 may be divided into a client-side optical transceiver module and a signal processor. The client-side optical transceiver module may also be referred to as an optical transceiver, and is configured to receive and/or send service data. The signal processor is configured to map service data to a data frame and demap the service data from the data frame. The cross-connect board 202 is configured to exchange data frames, to complete exchange of one or more types of data frames. The line board 203 mainly processes a line-side data frame. Specifically, the line board 203 may be divided into a line-side optical module and a signal processor. The line-side optical module may be referred to as an optical transceiver, and is configured to receive and/or send a data frame. The signal processor is configured to multiplex and demultiplex the line-side data frame, or map and demap the line-side data frame. The system control and communication board 204 is configured to implement system control. Specifically, information may be collected from different boards, or a control instruction may be sent to a corresponding board. It should be noted that, unless otherwise specified, there may be one or more specific components (for example, signal processors). This is not limited in this application. It should be further noted that a type of a board included in the device, a function design of the board, and a quantity of boards are not limited in this application. It should be noted that during specific implementation, the foregoing two boards may alternatively be designed as one board. In addition, the network device may further include a standby power supply, a heat dissipation fan, and the like.

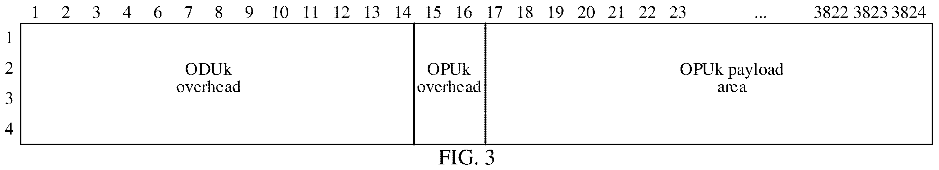

FIG. 3 is a diagram of a frame structure of an OTN frame applicable to an embodiment of this application. As shown in FIG. 3, the OTN frame is of a frame structure with four rows and a plurality of columns, and includes an overhead area and a payload area. First 4 rows*16 columns are overhead areas (used to carry ODUk overheads, OPU overheads, and the like) of an OTU/ODU/optical payload unit (optical payload unit, OPU), and the following rows and columns are OPU payload areas. Specifically, for the OTN frame structure, refer to related descriptions in a current protocol. Details are not described herein.

As one of key technologies in OTN technologies, an optical service unit (optical service unit, OSU) is mainly configured to carry client services at a rate of 10 M to 100 Gbps. A low-speed small-granularity service signal is carried in the OSU and then the OSU is mapped to ODUk/ODUflex, so that a transmission delay of a service can be reduced. This resolves a problem of low efficiency of carrying a low-speed small-granularity service in the original OTN technologies. It is well known that, in an OTN system, a destination device recovers correct server layer clock information depending on correct mapping and demapping processes between an OTN data frame and a service. However, due to division into low-speed small-granularity services, a quantity of ports carrying services in the OTN system increases sharply. If a solution in which each device recovers clock information once and regenerates new clock information is used, extremely high processing complexity and huge overheads are caused. Therefore, to simplify the clock recovery solution of an OSU service, an implementable solution is obtaining phase difference information by accumulating phase differences (phase differences, PDs) generated between adjacent devices, and recover a clock of the OTN frame at the destination device by using the received phase difference information. However, although the method simplifies a processing procedure of clock recovery, because only phase difference information of an integer value can be transmitted in this solution, and there is a slight deviation between local frequencies of devices, phase difference information received by the destination device per unit of time has jitter to some extent, and the jitter has a low-frequency and high-amplitude feature, and is difficult to be eliminated by using a conventional linear system (for example, a low-pass filter).

To resolve the foregoing problem, this application provides a clock recovery method. Input phase difference information is accumulated in the destination device, and an input amplitude of phase difference information of a clock recovery loop is restricted, so that jitter of phase difference information received by the destination device is effectively reduced without sacrifice of a loop bandwidth. By using the nonlinear signal processing mechanism, accuracy of clock recovery can be further improved, and high-reliability clock recovery is implemented.

The following describes in detail the clock recovery method provided in this application with reference to the accompanying drawings.

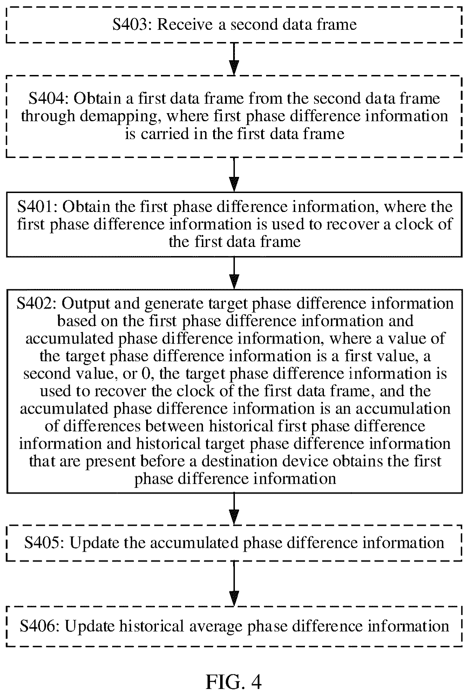

FIG. 4 is a schematic flowchart of a clock recovery method 400 according to an embodiment of this application. The method 400 is performed by a destination device. The destination device may be an OTN device, or a component (for example, a chip or a chip system) of the OTN device. Specifically, the method 400 shown in FIG. 4 includes the following plurality of steps.

S401: Obtain first phase difference information.

Specifically, when recovering a clock of service data based on the first phase difference information, the destination device needs to receive input phase difference information from an upstream device, calculate a local phase difference, and sum up the input phase difference information and the local phase difference to obtain the first phase difference information. The input phase difference information is a sum of phase differences between one or more groups of two adjacent upstream devices in one or more upstream devices of the destination device through which a first data frame passes. For example, when the destination device is a $5^{th}$ device in a transport network, the upstream devices of the destination device includes a transmitting end device, an intermediate device #1, an intermediate device #2, and an intermediate device #3. In this case, the input phase difference information is a sum of a phase difference between the intermediate device #1 and the transmitting end device (which may also be referred to as a local phase difference of the intermediate device #1), a phase difference between the intermediate device #2 and the intermediate device #1 (which may also be referred to as a local phase difference of the intermediate device #2), and a phase difference between the intermediate device #3 and the intermediate device #2 (which may also be referred to as a local phase difference of the intermediate device #3). That is, the input phase difference information received by the destination device is an accumulation of the foregoing three groups of phase differences. It should be understood that because the transmitting end device is a $1^{st}$ device in the transport network, a local phase difference of the transmitting end device may be considered as 0.

In a feasible implementation, the phase difference between two adjacent devices is represented by calculating a quantity of nominal clock periodicities, that is, the phase difference between the adjacent devices is an integer multiple of the nominal clock periodicity. For example, when the intermediate device #1 calculates the phase difference between the intermediate device #1 and the transmitting end device, the intermediate device #1 first obtains clock information (for example, a service layer clock) from the transmitting end device, calculates a quantity of nominal clock periodicities of the clock in a detection periodicity, calculates a quantity of nominal clock periodicities of a local clock in a same detection periodicity, and obtains the phase difference between the intermediate device #1 and the transmitting end device by calculating a difference between the two obtained quantities of periodicities. Similarly, the phase difference between the intermediate device #2 and the intermediate device #1, the phase difference between the intermediate device #3 and the intermediate device #2, and the local phase difference of the destination device (to be specific, a phase difference between the destination device and an upstream device adjacent to the destination device, for example, the intermediate device #3 in the foregoing example) may be calculated by using the same method. Details are not described herein again.

S402: Generate target phase difference information based on the first phase difference information and accumulated phase difference information, where a value of the target phase difference information is a first value, a second value, or 0, the target phase difference information is used to recover a clock of the first data frame, and the accumulated phase difference information is an accumulation of differences between historical first phase difference information and historical target phase difference information that are present before the destination device obtains the first phase difference information.

Optionally, the first value and the second value are fixed values, and absolute values of the first value and the second value are the same. For example, the first value is 1, and the second value is -1. Alternatively, values of the first value and the second value are obtained through calculation based on the first phase difference information and the accumulated phase difference information, and different values may be selected at different moments based on the first phase difference information and the accumulated phase difference information. For example, when the destination device performs clock recovery in an initial phase, because the first phase difference information changes fast with time, an average accumulated phase difference of the accumulated phase difference information in a short period of time after the destination device starts clock recovery also changes fast with time. To cause frequency of the target phase difference information generated by the destination device (that is, a speed at which the target phase difference information changes with time) to be the same as frequency of the first phase difference information (a speed at which the first phase difference information changes with time) as much as possible, the first value and the second value may be appropriately increased, and dynamically set to values that change in direct proportion to average accumulated phase difference information. After a period of time, when determining that the average accumulated phase difference is less than a preset value (the preset value may be predefined), the destination device switches the first value and the second value to fixed values.

It should be noted that, the destination device generates one piece of corresponding target phase difference information when obtaining the first phase difference information once, and the generated target phase difference information is related to the first phase difference information and the accumulated phase difference information that are obtained by the destination device.

In the solution of this application, the accumulated phase difference information may be understood as a residual between a plurality of pieces of historical first phase difference information received by the destination device and a plurality of pieces of historical target phase difference information correspondingly generated by the destination device, or a net sum of accumulated input historical first phase difference information and accumulated output historical target phase difference information (used for clock recovery). For example, before obtaining the first phase difference information, if the destination device has obtained historical first phase difference information for three times: historical first phase difference information #1, historical first phase difference information #2, and historical first phase difference information #3, and correspondingly generates three pieces of historical target phase difference information, including historical target phase difference information #1, historical target phase difference information #2, and historical target phase difference information #3, the accumulated phase difference information is an accumulated sum of three differences: a difference between the historical first phase difference information #1 and the historical target phase difference information #1, a difference between the historical first phase difference information #2 and the historical target phase difference information #2, and a difference between the historical first phase difference information #3 and the historical target phase difference information #3.

It should be noted that a name of the accumulated phase difference information is merely an example, or another name may be used, for example, historical phase difference information or an accumulated residual. This is not limited in this application.

In some embodiments, the accumulated phase difference information is phase difference information directly stored in the destination device. To be specific, the destination device accumulates and stores a difference between first phase difference information obtained each time and target phase difference information generated each time, to generate the accumulated phase difference information. It should be understood that, in this scenario, the destination device always stores a value of the accumulated phase difference information.

In some other embodiments, the destination device stores first phase difference information obtained each time, and stores correspondingly generated target phase difference information. In this case, the accumulated phase difference information is indirectly obtained by accumulating differences between a first phase difference information sequence and a target phase difference information sequence that are stored in the destination device. In this case, it may be understood as that the accumulated phase difference information is phase difference information indirectly stored in the destination device.

In some other embodiments, the destination device accumulates and stores first phase difference information obtained each time, and accumulates and stores correspondingly generated target phase difference information. In this case, the accumulated phase difference information is indirectly obtained by calculating a difference between first phase difference information accumulated and stored by the destination device and target phase difference information accumulated and stored by the destination device. That is, the accumulated phase difference information in this manner is also indirectly stored phase difference information. In comparison with the foregoing solution of storing a sequence, this solution can reduce buffer space of the destination device.

It should be understood that, there is no accumulation process for a difference between first phase difference information obtained by the destination device for a first time and target phase difference information generated by the destination device for a first time, and the difference only needs to be stored in the destination device.

It should be further noted that, that the destination device recovers the clock of the first data frame by using the target phase difference information means: After generating the target phase difference information, the destination device adjusts, based on the target phase difference information, a clock of the received first data frame to be consistent with a clock of the first data frame sent by a transmitting end (or understood as satisfying a specific error range).

When the first data frame is a small-bandwidth data frame, and a service of the first data frame is mapped to a second data frame during transmission, the clock recovery method provided in this application further includes the following S403 and S404.

S403: Receive the second data frame.

S404: Obtain the first data frame from the second data frame through demapping, where the first phase difference information is carried in the first data frame.

Specifically, after receiving the second data frame from the upstream device, the destination device obtains the first data frame from the second data frame through demapping, and obtains the first phase difference information from the first data frame.

It should be noted that, in the solution of this application, the first phase difference information may be carried in an overhead area of the first data frame, and the first phase difference information may occupy at least one byte. In addition, to improve bit error tolerance performance of a system, the first phase difference information may be repeatedly transmitted for a plurality of times. This is not limited in this application.

For example, when both the first data frame and the second data frame are OTN frames, the first data frame is an OSU frame, and the second data frame is an ODU frame, for example, may be an ODUk frame or an ODUflex frame.

In addition, to cause the destination device to continuously obtain the first phase difference information and generate the corresponding target phase difference information based on the first phase difference information obtained each time, the clock recovery method provided in this application further includes the following S405 and S406.

S405: Update the accumulated phase difference information.

After generating the target phase difference information, the destination device performs an update operation on the accumulated phase difference information. It should be understood that updated accumulated phase difference information is the accumulated phase difference information used when the target phase difference information is generated plus the difference between the obtained first phase difference information and the generated target phase difference information.

It should be noted that, when the destination device generates the target phase difference information by using the following method 500, the updated accumulated phase difference information is a difference between instantaneous phase difference information generated in S501 and the target phase difference information. For specific calculation of the instantaneous phase difference information, refer to the following descriptions in S501. Details are not described herein.

S406: Update historical average accumulated phase difference information.

After generating the target phase difference information, the destination device performs an update operation on the historical average accumulated phase difference information. In this step, after generating the target phase difference information by using the following method 500, the destination device updates the current historical average accumulated phase difference information to average accumulated phase difference information currently obtained through calculation. That is, updated historical average accumulated phase difference information is average accumulated phase difference information generated in S502. For specific calculation of the average accumulated phase difference information, refer to the following descriptions in S502. Details are not described herein.

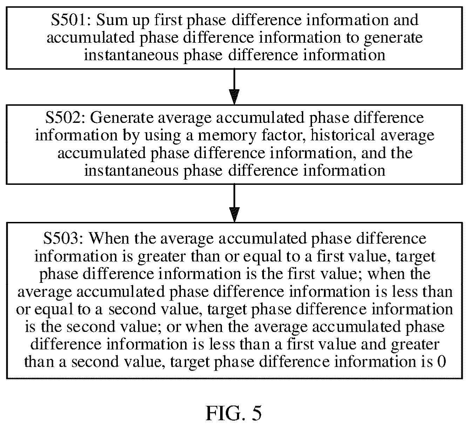

FIG. 5 is a schematic flowchart of a method 500 for generating target phase difference information according to an embodiment of this application. The method 500 is performed by a destination device. Specifically, the method 500 shown in FIG. 5 includes the following plurality of steps.

S501: Sum up first phase difference information and accumulated phase difference information to generate instantaneous phase difference information.

Specifically, after obtaining the first phase difference information (that is, performs the foregoing S401), the target device sums up the first phase difference information and the accumulated phase difference information (including the foregoing direct storage or indirect storage) to obtain the instantaneous phase difference information.

S502: Generate average accumulated phase difference information by using a memory factor, historical average accumulated phase difference information, and the instantaneous phase difference information.

It should be noted that a manner of calculating the average accumulated phase difference information is not limited in this application. In other words, in the solution of this application, generation of the average accumulated phase difference information is related to the memory factor and the historical average accumulated phase difference information. The historical average accumulated phase difference information may be understood as average accumulated phase difference information obtained through calculation when the destination device generates the target phase difference information last time.

In the solution of this application, the average accumulated phase difference information and the historical average accumulated phase difference information each may be understood as an average of the accumulated phase difference information, that is, an average value of the accumulated phase difference information in a period of time.

It should be noted that a name of the memory factor is merely an example, or another name may be used, for example, a smoothing constant or a smoothing coefficient. This is not limited in this application. In addition, a design of the memory factor may be adaptively adjusted and changed based on a design parameter of a system. This is not limited in this application.

S503: When the average accumulated phase difference information is greater than or equal to a first value, the target phase difference information is the first value; when the average accumulated phase difference information is less than or equal to a second value, the target phase difference information is the second value; or when the average accumulated phase difference information is less than a first value and greater than a second value, the target phase difference information is 0.

In conclusion, it can be learned that, in the solution of this application, the target phase difference information generated by the destination device is clipped phase difference information. To be specific, the destination device clips, to the first value, the second value, or 0, the target phase difference information used for clock recovery. In addition, the destination device accumulates a difference between first phase difference information obtained each time and target phase difference information generated each time (the accumulated phase difference information), so that the method can avoid loss of phase difference information, that is, implement lossless clock recovery. According to the solution provided in this application, inaccuracy of clock recovery caused when clock recovery is performed by directly using the obtained first phase difference information can be avoided. That is, jitter in the first phase difference information is avoided by changing time distribution of the first phase difference information, and system reliability is further improved.

Generally, a typical solution for the destination device to perform clock recovery is using a digital phase-locked loop (digital phase-locked loop, DPLL) structure. The DPLL structure is a phase feedback control system. In this structure, synchronization between an output signal and an input signal is implemented by comparing a phase difference between the two signals and continuously adjusting a phase of the output signal. A digital phase-locked loop mainly includes a phase detector, a low-pass filter (loop filter, LF), and a digitally controlled oscillator (digitally controlled oscillator, DCO). The phase detector is configured to output a phase difference between an input clock and a feedback output clock. The low-pass filter is configured to filter out a high-frequency component in a phase difference signal output by the phase detector, to obtain a smooth signal. The digitally controlled oscillator is configured to output an oscillation waveform with a variable frequency, and determines noise performance and power consumption of an entire phase-locked loop. In addition, an output oscillation signal is sent to a digital time converter in a negative feedback manner to reduce a phase difference. In this way, a frequency of the output signal is finally consistent with a frequency of a reference clock, that is, a phase is locked.

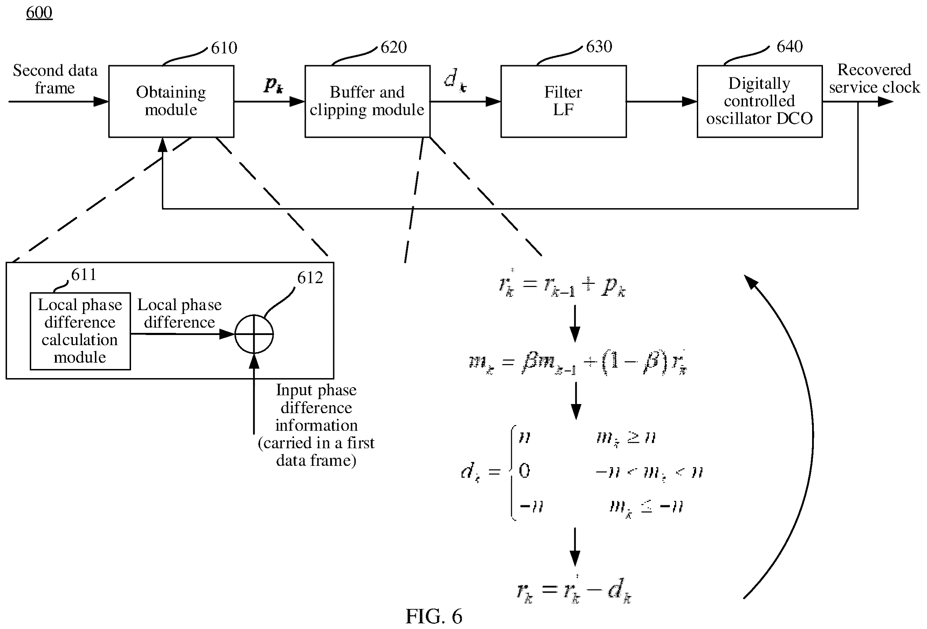

Based on the foregoing digital phase-locked loop solution, FIG. 6 is a diagram of a structure of a clock recovery system 600 according to an embodiment of this application. As shown in FIG. 6, the system 600 includes an obtaining module 610, a buffer and clipping module 620, a filter 630, and a digitally controlled oscillator 640.

Specifically, the obtaining module 610 is configured to receive a first data frame from an upstream device and obtain first phase difference information $p_k$. For example, the obtaining module 610 includes a calculation module 611 and an adder 612. The calculation module 611 is configured to calculate a local phase difference, and the adder 612 is configured to sum up the local phase difference and input phase difference information carried in the first data frame to obtain the first phase difference information $p_k$.

The buffer and clipping module 620 is configured to receive the first phase difference information $p_k$ and generate target phase difference information $d_k$. For example, FIG. 6 shows an implementation in which the buffer and clipping module 620 generates the target phase difference information $d_k$. As shown in FIG. 6, after receiving the first phase difference information $p_k$, the buffer and clipping module 620 first sums up the first phase difference information $p_k$ and accumulated phase difference information $r_{k-1}$ to generate instantaneous phase difference information $r_k'$, and then obtains average accumulated phase difference information $m_k$ according to the following formula (1) by using a memory factor $\beta$, historical average accumulated phase difference information $m_{k-1}$, and the instantaneous phase difference information $r_k'$.

$$m_k = \beta m_{k-1} + (1 - \beta) r_k' \qquad (1)$$

After generating the average accumulated phase difference information $m_k$, the buffer and clipping module 620 compares the average accumulated phase difference information $m_k$ with a first value $n$, a second value $-n$, and 0, to generate the target phase difference information $d_k$, and finally updates the accumulated phase difference information $r_{k-1}$ to $r_k$.

In a possible manner, $n$ is a fixed value 1. In this case, the first value $n$ is 1, and the second value $-n$ is $-1$. In another possible manner, a value of the target phase difference information $d_k$ is positively correlated with the average accumulated phase difference information $m_k$. When the average accumulated phase difference information $m_k$ increases, the target phase difference information $d_k$ increases. In other words, $n$ in values of the first value and the second value can dynamically change based on the first phase difference information and the accumulated phase difference information.

It should be noted that the foregoing formula (1) is merely an example of a method for calculating the average accumulated phase difference information $m_k$, and for example, another averaging algorithm may alternatively be used, for example, exponential moving averaging or double exponential averaging. This is not limited in this application.

The filter 630 performs low-pass filtering on the target phase difference information $d_k$ output by the buffer and clipping module 620, to remove a high-frequency component from the target phase difference information $d_k$.

The digitally controlled oscillator 640 recovers a service clock based on filtered phase difference information. The recovery process is a dynamic adjustment process. To be specific, each time the digitally controlled oscillator 640 generates a recovered clock, the digitally controlled oscillator 640 feeds back the clock to the local phase difference calculation module of the obtaining module 610 until an adjusted output clock is consistent with a clock of a service of the first data frame sent by an input-end device.

It should be noted that the foregoing clock recovery system 600 is merely an example provided in this embodiment of this application, but not a limitation, and the shown structure of the obtaining module 610 is also merely an example. It should be understood that the system may further include another unit or module, for example, a frequency divider. The obtaining module 610 may further include a clock module and the like. This is not limited in this application.

The buffer and clipping module 620 is introduced into the destination device, so that the destination device can accumulate input phase difference information, and output clipped phase difference information, to implement a function similar to a "reservoir", improve accuracy of clock recovery without losing phase difference information, and further improve system reliability.

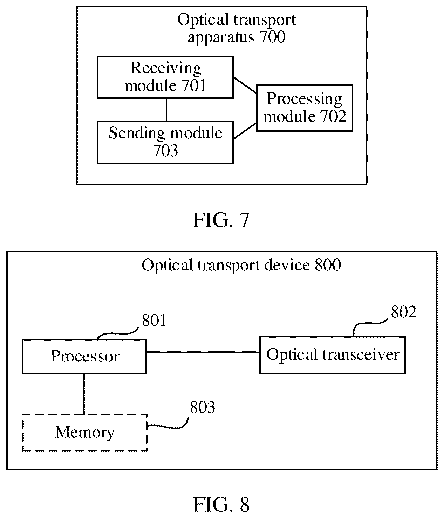

FIG. 7 is a block diagram of an optical transport device 700 according to an embodiment of this application. The device 700 includes a receiving module 701, a processing module 702, and a sending module 703. The receiving module 701 may be configured to implement a corresponding receiving function. The receiving module 701 may also be referred to as a receiving unit. The processing module 702 may be configured to implement a corresponding processing function. The sending module 703 may be configured to implement a corresponding sending function, and the sending module 703 may also be referred to as a sending unit. Optionally, the device 700 further includes a storage unit. The storage unit may be configured to store at least one of instructions, data, and another configuration parameter. The processing module 702 may read content stored in the storage unit, so that the device implements actions of the destination device in the foregoing method embodiments.

The device 700 may be configured to perform actions performed by the destination device in the foregoing method embodiments. In this case, the device 700 may be a component of the destination device. The receiving module 701 is configured to perform a receiving-related operation of the destination device in the foregoing method embodiments. The processing module 702 is configured to perform a processing-related operation of the destination device in the foregoing method embodiments. The sending module 703 is configured to perform a sending-related operation of the destination device in the foregoing method embodiments.

It should be understood that a specific process in which the modules perform the foregoing corresponding steps is described in detail in the foregoing method embodiments. For brevity, details are not described herein again.

FIG. 8 is a diagram of a structure of a possible optical transport device 800. The device is a destination device. As shown in FIG. 8, the device 800 includes a processor 801, an optical transceiver 802, and a memory 803. The memory 803 is optional. The device 800 may be used in a receive-side device (for example, the destination device).

When used in the receive-side device, the processor 801 and the optical transceiver 802 are configured to implement the method performed by the destination device shown in FIG. 4 or FIG. 5. In an implementation process, the steps of the processing procedure may be performed by using an integrated logic circuit of hardware in the processor 801 or instructions in a form of software to complete the method performed by the receive-side device in the foregoing accompanying drawings. The optical transceiver 802 is configured to receive an OTN frame sent by a peer device (also referred to as a transmitting end device), to send the OTN frame to the processor 801 for subsequent processing.

The memory 803 is configured to store instructions, so that the processor 801 performs the steps mentioned in FIG. 4 or FIG. 5. Alternatively, the memory 803 may be configured to store other instructions, to configure a parameter of the processor 801 to implement a corresponding function.

It should be noted that, in the diagram of the hardware structure of the network device in FIG. 2, the processor 801 and the memory 803 may be located in a tributary board, or may be located in a tributary-line integrated board. Alternatively, there are a plurality of processors 801 and a plurality of memories 803, which are respectively located in a tributary board and a line board. The two boards cooperate to complete the foregoing method steps.

It should be noted that the device in FIG. 8 may also be configured to perform method steps in variations of embodiments shown in the foregoing accompanying drawings. Details are not described herein again.

Based on the foregoing embodiments, an embodiment of this application further provides a computer-readable storage medium. The storage medium stores a software program. When the software program is read and executed by one or more processors, the method provided in any one or more of the foregoing embodiments may be implemented. The computer-readable storage medium may include any medium that can store program code, for example, a USB flash drive, a removable hard disk, a read-only memory, a random access memory, a magnetic disk, or an optical disc.

Based on the foregoing embodiments, an embodiment of this application further provides a chip. The chip includes a processor, configured to implement functions in any one or more of the foregoing embodiments, for example, obtain or process the OTN frame in the foregoing methods. Optionally, the chip further includes a memory. The memory is configured to store program instructions and data that are necessary for execution by the processor. The chip may include a chip, or may include a chip and another discrete component.

It is clear that a person skilled in the art may make various modifications and variations to embodiments of this application without departing from the scope of embodiments of this application. In this case, this application is intended to cover these modifications and variations of embodiments of this application provided that they fall within the scope of the claims of this application and equivalent technologies thereof.

It should be understood that, the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example rather than limitative description, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that when the processor is a general-purpose processor, a DSP, an ASIC, an FPGA or another programmable logic device, a discrete gate, a transistor logic device, or a discrete hardware component, the memory may be integrated into the processor.

A person of ordinary skill in the art may be aware that, in combination with the examples described in embodiments disclosed in this specification, units and steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that, the implementation goes beyond the protection scope of this application.

In several embodiments provided in this application, it should be understood that the disclosed apparatuses and methods may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

All or some of the foregoing embodiments may be implemented by software, hardware, firmware, or any combination thereof. When software is used to implement embodiments, all or some of embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like. For example, the usable medium may include but is not limited to any medium that can store program code, for example, a USB flash disk, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A clock recovery method, applied to an optical transport device, and comprising:

    obtaining first phase difference information, wherein the first phase difference information is a sum of input phase difference information and a local phase difference, and the input phase difference information is a sum of phase differences between one or more groups of two adjacent upstream devices in one or more upstream devices of the optical transport device through which a first data frame passes; and generating target phase difference information based on the first phase difference information and accumulated phase difference information, wherein a value of the target phase difference information is a first value, a second value, or 0, the target phase difference information is used to recover a clock of the first data frame, and the accumulated phase difference information is an accumulation of differences between historical first phase difference information and historical target phase difference information that are present before the optical transport device obtains the first phase difference information.

2. The method according to claim 1, wherein the generating the target phase difference information based on the first phase difference information and the accumulated phase difference information comprises:

    summing up the first phase difference information and the accumulated phase difference information to generate instantaneous phase difference information; and generating average accumulated phase difference information by using a memory factor, historical average accumulated phase difference information, and the instantaneous phase difference information, wherein when the average accumulated phase difference information is greater than or equal to the first value, the target phase difference information is the first value; when the average accumulated phase difference information is less than or equal to the second value, the target phase difference information is the second value; or when the average accumulated phase difference information is less than the first value and greater than the second value, the target phase difference information is 0.

3. The method according to claim 2, wherein the average accumulated phase difference information $m_k$ satisfies:

$$m_k = \beta m_{k-1} + \left(1 - \beta\right) r_k',$$

wherein
$\beta$ is the memory factor, $m_{k-1}$ is the historical average accumulated phase difference information, and $r_k'$ is the instantaneous phase difference information.

4. The method according to claim 2 or 3, wherein the method further comprises:

    updating the accumulated phase difference information, wherein updated accumulated phase difference information is a sum of a difference between the first phase difference information and the target phase difference information and the accumulated phase difference information; and updating the historical average accumulated phase difference information, wherein updated historical average accumulated phase difference information is the average accumulated phase difference information.

5. The method according to any one of claims 1 to 4, wherein the first value is equal to n, the second value is equal to -n, and n is an integer greater than or equal to 1.

6. The method according to claim 5, wherein n is equal to 1.

7. The method according to any one of claims 1 to 4, wherein the first value and the second value are directly proportional to the accumulated phase difference information.

8. The method according to any one of claims 1 to 7, wherein the method further comprises:

    receiving a second data frame from the upstream device; and obtaining the first data frame from the second data frame from the upstream device through demapping, wherein the first phase difference information is carried in the first data frame.

9. A clock recovery apparatus, comprising: an obtaining module and a processing module, wherein

the obtaining module is configured to obtain first phase difference information, wherein the first phase difference information is a sum of input phase difference information and a local phase difference, and the input phase difference information is a sum of phase differences between one or more groups of two adjacent upstream devices in one or more upstream devices of the apparatus through which a first data frame passes; and

the processing module generates target phase difference information based on the first phase difference information and accumulated phase difference information, wherein a value of the target phase difference information is a first value, a second value, or 0, the target phase difference information is used to recover a clock of the first data frame, and the accumulated phase difference information is an accumulation of differences between historical first phase difference information and historical target phase difference information that are present before the apparatus obtains the first phase difference information.

10. The apparatus according to claim 9, wherein the processing module is specifically configured to:

sum up the first phase difference information and the accumulated phase difference information to generate instantaneous phase difference information; and

generate average accumulated phase difference information by using a memory factor, historical average accumulated phase difference information, and the instantaneous phase difference information, wherein when the average accumulated phase difference information is greater than or equal to the first value, the target phase difference information is the first value; when the average accumulated phase difference information is less than or equal to the second value, the target phase difference information is the second value; or when the average accumulated phase difference information is less than the first value and greater than the second value, the target phase difference information is 0.

11. The apparatus according to claim 10, wherein the average accumulated phase difference information $m_k$ satisfies:

$$m_k = \beta m_{k-1} + (1-\beta) r_k^{'},$$

wherein

$\beta$ is the memory factor, $m_{k-1}$ is the historical average accumulated phase difference information, and $r_k^{'}$ is the instantaneous phase difference information.

12. The apparatus according to claim 10 or 11, wherein the processing module is further configured to:

update the accumulated phase difference information, wherein updated accumulated phase difference information is a sum of a difference between the first phase difference information and the target phase difference information and the accumulated phase difference information; and

update the historical average accumulated phase difference information, wherein updated historical average accumulated phase difference information is the average accumulated phase difference information.

13. The apparatus according to any one of claims 9 to 12, wherein the first value is equal to n, the second value is equal to -n, and n is an integer greater than or equal to 1.

14. The apparatus according to claim 13, wherein n is equal to 1.

15. The apparatus according to any one of claims 9 to 12, wherein the first value and the second value are directly proportional to the accumulated phase difference information.

16. The apparatus according to any one of claims 9 to 15, wherein the obtaining module is further configured to:

receive a second data frame from the upstream device; and

obtain the first data frame from the second data frame from the upstream device through demapping, wherein the first phase difference information is carried in the first data frame.

17. An optical transport apparatus, comprising an optical transceiver and a processor, wherein

the processor is configured to perform the method according to any one of claims 1 to 8; and

the optical transceiver is configured to receive a second data frame from an upstream device and transmit the second data frame to the processor.

18. A chip, wherein the chip comprises a processor and a communication interface, wherein

the communication interface is configured to receive a second data frame from a communication apparatus other than a communication apparatus comprising the chip and transmit the second data frame to the processor; and
the processor is configured to perform the method according to any one of claims 1 to 8.

FIG. 1

FIG. 2

| 1 | 2 | 3 | 4 | 6 | 7 | 8 | 9 | 10 | 11 | 12 | 13 | 14 | 15 | 16 | 17 | 18 | 19 | 20 | 21 | 22 | 23 | ... | 3822 | 3823 | 3824 |

ODUk overhead | OPUk overhead | OPUk payload area

FIG. 3

```
┌──────────────────────────────────────────────────────────────┐
│              S403: Receive a second data frame                 │
└──────────────────────────────────────────────────────────────┘
                              │
                              ▼
┌──────────────────────────────────────────────────────────────┐
│     S404: Obtain a first data frame from the second data frame │
│   through demapping, where first phase difference information   │
│              is carried in the first data frame                │
└──────────────────────────────────────────────────────────────┘
                              │
                              ▼
┌──────────────────────────────────────────────────────────────┐
│  S401: Obtain the first phase difference information, where the │
│  first phase difference information is used to recover a clock of│
│                    the first data frame                        │
└──────────────────────────────────────────────────────────────┘
                              │
                              ▼
┌──────────────────────────────────────────────────────────────┐
│ S402: Output and generate target phase difference information   │
│        based on the first phase difference information and      │
│   accumulated phase difference information, where a value of    │
│     the target phase difference information is a first value, a  │
│  second value, or 0, the target phase difference information is │
│    used to recover the clock of the first data frame, and the   │
│ accumulated phase difference information is an accumulation      │
│       of differences between historical first phase difference  │
│  information and historical target phase difference information │
│    that are present before a destination device obtains the first│
│              phase difference information                       │
└──────────────────────────────────────────────────────────────┘
                              │
                              ▼
┌──────────────────────────────────────────────────────────────┐
│  S405: Update the accumulated phase difference information      │
└──────────────────────────────────────────────────────────────┘
                              │
                              ▼
┌──────────────────────────────────────────────────────────────┐
│  S406: Update historical average phase difference information   │
└──────────────────────────────────────────────────────────────┘
```

FIG. 4

S501: Sum up first phase difference information and accumulated phase difference information to generate instantaneous phase difference information

S502: Generate average accumulated phase difference information by using a memory factor, historical average accumulated phase difference information, and the instantaneous phase difference information

S503: When the average accumulated phase difference information is greater than or equal to a first value, target phase difference information is the first value; when the average accumulated phase difference information is less than or equal to a second value, target phase difference information is the second value; or when the average accumulated phase difference information is less than a first value and greater than a second value, target phase difference information is 0

FIG. 5

600

Second data
frame → **Obtaining module** (610) → $p_k$ → **Buffer and clipping module** (620) → $d_k$ → **Filter LF** (630) → **Digitally controlled oscillator DCO** (640) → Recovered service clock

611 — **Local phase difference calculation module** → Local phase difference → (612) ⊕ ← Input phase difference information (carried in a first data frame)

$$r_k^{'} = r_{k-1} + p_k$$

$$m_k = \beta m_{k-1} + (1 - \beta) r_k^{'}$$

$$d_k = \begin{cases} n & m_k \geq n \\ 0 & -n < m_k < n \\ -n & m_k \leq -n \end{cases}$$

$$r_k = r_k^{'} - d_k$$

FIG. 6

Optical transport
apparatus 700

Receiving
module 701

Processing
module 702

Sending module
703

FIG. 7

Optical transport device 800

801

Processor

802

Optical transceiver

803

Memory

FIG. 8

## INTERNATIONAL SEARCH REPORT

| | International application No. |
|---|---|
| | **PCT/CN2024/075471** |

| A. | CLASSIFICATION OF SUBJECT MATTER |
|---|---|

H04J 3/06(2006.01)i

According to International Patent Classification (IPC) or to both national classification and IPC

| B. | FIELDS SEARCHED |
|---|---|

Minimum documentation searched (classification system followed by classification symbols)

IPC:H04J,H04Q,H04L

Documentation searched other than minimum documentation to the extent that such documents are included in the fields searched

Electronic data base consulted during the international search (name of data base and, where practicable, search terms used)

CNTXT, WPABS, ENTXTC, VEN, CNKI, IEEE, 3GPP: 相位, 发送, 接收, 中间, 中继, 累加, 累计, 历史, 光传送, 光传输, 时钟, 恢复, 同步, 校准, 滤波器, 锁相环, phase, PD, transmit, receive, relay, accumulation, OTN, clock, recovery, calibration, filter, PLL

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 110445568 A (HUAWEI TECHNOLOGIES CO., LTD.) 12 November 2019 (2019-11-12) description, paragraphs [0048]-[0122], and figures 1-7 | 1-18 |
| A | CN 106712885 A (BEIJING HUAWEI DIGITAL TECHNOLOGY CO., LTD.) 24 May 2017 (2017-05-24) entire document | 1-18 |
| A | CN 110248260 A (HUAWEI TECHNOLOGIES CO., LTD.) 17 September 2019 (2019-09-17) entire document | 1-18 |
| A | CN 110677210 A (HUAWEI TECHNOLOGIES CO., LTD.) 10 January 2020 (2020-01-10) entire document | 1-18 |
| A | US 2017054548 A1 (MACNICA AMERICAS, INC.) 23 February 2017 (2017-02-23) entire document | 1-18 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **19 April 2024** | **24 April 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/075471**

| Patent document cited in search report | | | Publication date (day/month/year) | Patent family member(s) | | | Publication date (day/month/year) |
|---|---|---|---|---|---|---|---|
| CN | 110445568 | A | 12 November 2019 | US | 2019312717 | A1 | 10 October 2019 |
| | | | | WO | 2018113539 | A1 | 28 June 2018 |
| | | | | EP | 3544210 | A1 | 25 September 2019 |
| | | | | CN | 108242965 | A | 03 July 2018 |
| CN | 106712885 | A | 24 May 2017 | | None | | |
| CN | 110248260 | A | 17 September 2019 | WO | 2019170064 | A1 | 12 September 2019 |
| | | | | US | 2020403698 | A1 | 24 December 2020 |
| | | | | EP | 3755001 | A1 | 23 December 2020 |
| CN | 110677210 | A | 10 January 2020 | | None | | |
| US | 2017054548 | A1 | 23 February 2017 | | None | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310409704